# EUROPÄISCHE PATENTSCHRIFT

(11) **EP 0 792 791 B1**
(45) Veröffentlichungstag und Bekanntmachung des Hinweises auf die Patenterteilung: **25.04.2001**
(21) Anmeldenummer: 97103389.9
(22) Anmeldetag: 28.02.1997
(51) Int. Cl.: B62D 51/02, B62B 3/06

(54) **Flurförderzeug mit einer höhenverstellbaren Stand- und/oder Sitzplattform**
Industrial truck with height adjustable platform for seating and/or standing
Chariot de manutention avec une plate-forme pour être assis et/ou debout et réglable en hauteur

(30) Priorität: 01.03.1996 DE 19607969
(43) Veröffentlichungstag der Anmeldung: 03.09.1997
(73) Patentinhaber: FIAT OM CARRELLI ELEVATORI S.p.A., 20141 Milano (IT)
(72) Erfinder: Mantovani, Guiseppe, 46029 Suzzara (Mantova) (IT); Andreoli, Gianfranco, 42047 Rolo (Reggio Emilia) (IT); Passeri, Gianni, 46030 Virgilio (Mantova) (IT)
(74) Vertreter: Kasseckert, Rainer

(56) Entgegenhaltungen:
- DE-A- 2 716 300
- DE-A- 4 413 630
- DE-U- 9 300 762
- US-A- 4 018 473

## Beschreibung

Die Erfindung betrifft ein Flurförderzeug mit einer höhenverstellbaren Stand- und/oder Sitzanordnung für eine Bedienperson, wobei die Stand- und/oder Sitzanordnung mit mindestens einem hydraulischen Stellzylinder in Wirkverbindung steht.

Die Höhenverstellbarkeit der Stand- und/oder Sitzanordnung eines Flurförderzeugs dient der Verbesserung der Ergonomie. Dadurch kann der Arbeitsplatz der Bedienperson an die Körpergröße optimal angepaßt werden. Da ein Flurförderzeug eine Arbeitsmaschine darstellt, die über viele Stunden hinweg als Arbeitsplatz dient, ist eine gute Ergonomie wichtig für ein ermüdungsfreies Arbeiten und damit für eine größtmögliche Arbeitsleistung.

Die bekannten Verstellmechanismen besitzen eine aufwendige Bauweise und sind vielfach nur umständlich handhabbar, so daß von der Verstellmöglichkeit oft gar kein Gebrauch gemacht wird.

Aus der gattungsbildenden DE 44 13 630 A1 ist ein Arbeitsfahrzeug, beispielsweise ein Flurförderzeug, mit einem aus einem Fahrersitz und einer Bodenplatte, die Bedienelemente für die Füße aufweist, bestehenden Fahrerarbeitsplatz bekannt. Zur Verbesserung der Ergonomie ist der Fahrersitz längs- und höhenverstellbar sowie die Bodenplatte höhenverstellbar ausgeführt. Die Verstellung des Fahrersitzes und der Bodenplatte kann hierbei mittels Elektromotoren, Hydraulik- oder Pneumatikmotoren, von Hand, durch Federkraft oder durch Schwerkraft erfolgen.

In der DE OS 27 16 300 ist ein Gabelstapler mit einem um eine vertikale Schwenkachse schwenkbaren Bedienungsstand bekannt. Der Bedienungsstand steht zum Schwenken mit einem Hydraulikzylinder in Verbindung, der parallel zum einem Lenkzylinder einer hydraulischen Lenkung angeschlossen ist. Nach Lösen einer mechanischen zwischen dem Bedienungsstand und dem Rahmen des Gabelstaplers wirksamen Arretierung kann durch Betätigen der Lenkung der Bedienungsstand verschwenkt werden.

Der vorliegenden Erfindung liegt die Aufgabe zugrunde, ein Flurförderzeug der eingangs genannten Art zur Verfügung zu stellen, das mit geringem Bauaufwand eine einfache und schnelle Höhenverstellung der Stand- und/oder Sitzanordnung ermöglicht.

Diese Aufgabe wird erfindungsgemäß dadurch gelöst, daß das Flurförderzeug mit einer Lenkhydraulik versehen ist, die eine Pumpe und einen beidseitig beaufschlagbaren Lenkmotor sowie eine zwischengeschaltete Steuereinrichtung aufweist, und der Stellzylinder zur Höhenverstellung der Stand- und/oder Sitzanordnung an die Lenkhydraulik anschließbar ist, wobei der Stellzylinder beidseitig beaufschlagbar und parallel zu dem Lenkmotor geschaltet ist und in einer Leitung, die zu dem Stellzylinder geführt ist, ein schaltbares Ventil angeordnet ist

Der erfindungswesentliche Gedanke besteht demnach darin die in Flurförderzeugen in der Regel ohnehin vorhandene Lenkhydraulik zur Höhenverstellung der Stand- und/ oder Sitzanordnung heranzuziehen. Infolgedessen bedarf es nur weniger zusätzlicher Teile, um eine wirkungsvolle Höhenverstellung zu erzielen. Sobald das Ventil in eine Stellung gebracht ist, in der der Druckölzufluß oder -abfluß ermöglicht ist, genügt die Betätigung des Lenkorgans des Flurförderzeugs, d.h. eine Drehbewegung am Lenkrad, um die Höhenverstellung der Stand- und/oder Sitzanordnung zu bewirken. Je nach Drehrichtung des Lenkrads wird dabei die Stand- und/oder Sitzanordnung nach oben oder unten bewegt.

Es bedarf dabei lediglich eines einzigen Ventils in einer der beiden zu dem beidseitig beaufschlagbaren Stellzylinder wirkenden Leitungen, um die Höhenverstellung anzusteuern. Je nach dem, in welche Richtung der Stellzylinder beaufschlagt wird, handelt es sich dann um eine Zulauf- oder Ablaufsteuerung.

Zweckmäßigerweise ist das Ventil in der Leitung angeordnet, die zu einem der Aufwärtsbewegung der Höhenverstellung zugeordneten Stellraum des Stellzylinders führt.

Mit besonderem Vorteil ist das Ventil als elektromagnetisch betätigbares Wegeventil mit einer Durchlaßstellung und einer Schließstellung ausgebildet, das durch mindestens eine Kontrolleinheit steuerbar ist, die an einen Stellsignalgeber zur Höhenverstellung und an Steuersignalgeber und Steuergeräte für Arbeitsfunktionen des Flurförderzeugs angeschlossen ist.

Auf diese Weise kann durch entsprechende Maßnahmen in der Kontrolleinheit eine Höhenverstellung der Stand- und/oder Sitzanordnung in bestimmten Betriebszuständen automatisch ausgeschlossen und somit eine Sicherheit gegen Fehlbedienungen geschaffen.

Hierbei erweist es sich als günstig, wenn die Kontrolleinheit derart in Wirkverbindung mit dem Ventil der Höhenverstellung und den Steuergeräten der Arbeitsfunktionen steht, daß bei Vorhandensein eines Steuersignals für eine Arbeitsfunktion und anschließendem Eingang eines Stellsignals für die Höhenverstellung das Ventil nicht in Offenstellung steuerbar ist und daß bei Vorhandensein eines Stellsignals für die Höhenverstellung und anschließendem Eingang eines Steuersignals für eine Arbeitsfunktion die Arbeitsfunktion zumindest bis zur Beendigung der Höhenverstellung gesperrt ist.

Dadurch wird sichergestellt, daß die Höhenverstellung nur dann erfolgen kann, wenn nicht gerade eine andere Funktion ausgeführt wird. Es ist daher ausgeschlossen, daß die Stand- und/oder Sitzanordnung bei fahrendem Flurförderzeug höhenverstellt wird. Umgekehrt werden Arbeitsfunktionen, z.B. das Anfahren des Fahrzeugs, erst dann ermöglicht, wenn ein zuvor eingeleiteter Höhenverstellvorgang abgeschlossen ist. Die Kontrolleinheit verhilft somit dem zuerst eingehenden Signal hinsichtlich der Ausführung des gewünschten Befehls zur Priorität.

Eine Weiterbildung der Erfindung sieht vor, daß der zur Höhenverstellung erforderliche Druck im Verstellzylinder kleiner ist als der im Lenkmotor beim Lenken des stehenden Fahrzeugs anstehende Druck und größer ist als der im Lenkmotor beim Lenken des fahrenden Flurförderzeugs anstehende Druck.

Durch diese Maßnahme wird bei stehendem Fahrzeug verhindert, daß während der Höhenverstellung der Stand- und/oder Sitzanordnung die gelenkten Räder mitbewegt und dadurch infolge Drehens auf der Stelle vorzeitig verschlissen werden. Darüber hinaus wird dadurch erreicht, daß dann, wenn das Flurförderzeug fährt und gleichzeitig durch einen Defekt das Ventil sich öffnet oder nach vorheriger Betätigung in der Offenstellung hängengeblieben ist, die Lenkung Priorität besitzt und die Höhenverstellung außer Betrieb bleibt. Die Lenkfunktion ist daher bei fahrendem Fahrzeug stets gewährleistet.

Zweckmäßigerweise ist hierzu in einer Leitung die zu dem Stellzylinder führt, insbesondere der Leitung, die zu einem der Aufwärtsbewegung der Höhenverstellung zugeordneten Stellraum des Stellzylinders führt, eine Druckbeeinflussungsvorrichtung angeordnet, beispielsweise eine Drossel.

Besonders vorteilhaft ist es, wenn die Stand- und/oder Sitzanordnung als Standplattform eines im Stehen zu fahrenden Flurförderzeugs ausgebildet ist.

Weitere Vorteile und Einzelheiten der Erfindung werden anhand eines in den schematischen Figuren dargestellten Ausführungsbeispiels näher erläutert. Dabei zeigt
- Figur 1: eine Seitenansicht eines im Stehen zu fahrenden, erfindungsgemäßen Flurförderzeugs,
- Figur 2: einen hydraulischen Schaltplan des erfindungsgemäßen Flurförderzeugs und
- Figur 3: ein Prinzipskizze der Höhenverstellung der Stand- und/oder Sitzanordnung.

Das erfindungsgemäße Flurförderzeug ist im Ausführungsbeispiels mit einer Standplattform 1 als Fahreraufenthaltsort ausgebildet. Die Standplattform 1 ist auf nicht näher gezeigte Weise höhenverstellbar im Flurförderzeug befestigt.

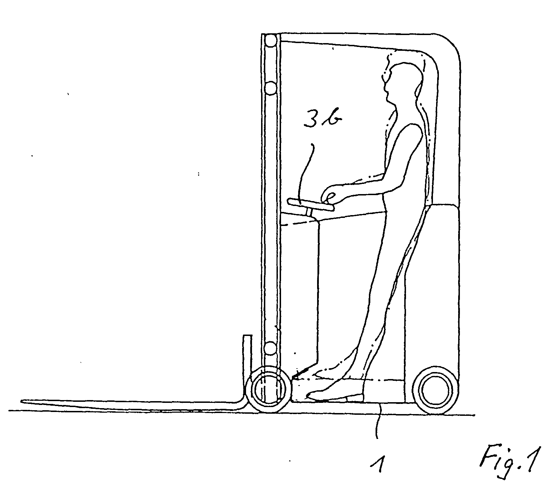

In Figur 1 ist ein Schaltplan der Lenkhydraulik des Flurförderzeugs dargestellt. Die Lenkhydraulik weist eine Steuereinrichtung 2 auf, die eine Lenkdosierpumpe 3 und ein Prioritätsventil 4 enthält und die eingangsseitig an die Förderleitung 5 einer Speisepumpe 6 angeschlossen ist (Anschluß P). Die Lenkdosierpumpe 3 ist mit einer Lenkwelle 3a versehen, an deren Ende ein Lenkrad 3b befestigt ist (siehe Figur 1). Ausgangsseitig sind zwei Anschlüsse L und R vorgesehen, von denen aus Verbindungsleitungen 7 und 8 zu den beiden Seiten eines Lenkmotors 9 führen.

Die Speisepumpe 6 wird von einem Elektromotor 10 angetrieben, der durch einen durch die Lenkdosierpumpe 3 betätigbaren Schalter 11 ein- und ausschaltbar ist.

Von dem Prioritätsventil 4 aus führt eine Leitung 12 (Anschluß LR der Steuereinrichtung 2) zu einer Arbeitshydraulik 13 und einer Bremshydraulik 14, die hier nicht näher beschrieben werden sollen. Das Prioritätsventil 4 sorgt für eine bevorzugte Versorgung der Lenkung mit Drucköl für den Fall, daß zeitgleich zur Lenkung die Arbeits- und/oder Bremshydraulik betätigt wird.

Die Standplattform 1 steht mit einem Stellzylinder 15 in Wirkverbindung, der erfindungsgemäß an die Lenkhydraulik anschließbar ist. Dies ist durch Zweigleitungen 7a und 7b ermöglicht, mit deren Hilfe der beidseitig beaufschlagbare Stellzylinder 15 zu dem Lenkmotor 9 parallel geschaltet ist. In der Leitung 8a, die zu einem Stellraum des Stellzylinders 15 führt, der der Aufwärtsbewegung der Höhenverstellung zugeordnet ist, befindet sich ein elektromagnetisch betätigbares Wegeventil 16 mit einer Schließstellung und einer Durchlaßstellung. Im unbetätigten Zustand befindet sich das Wegeventil 16 in Schließstellung.

Sofern sich das Wegeventil 16 in Durchlaßstellung befindet, kann durch Betätigen der Steuereinrichtung 2, d.h. durch Drehen am Lenkrad 3b, der Stellzylinder 15 mit Drucköl beaufschlagt und dadurch die Höhenverstellung der Standplattform 1 in die gewünschte Richtung aktiviert werden.

Hierbei ist vorgesehen, daß der zur Höhenverstellung erforderliche Druck im Verstellzylinder 15 kleiner ist als der im Lenkmotor 9 beim Lenken des stehenden Fahrzeugs anstehende Druck und größer ist als der im Lenkmotor 9 beim Lenken des fahrenden Flurförderzeugs anstehende Druck. Dadurch wird bei stehendem Fahrzeug verhindert, daß während der Höhenverstellung der Standplattform 1 die gelenkten Räder mitbewegt und dadurch infolge Drehens auf der Stelle vorzeitig verschlissen werden. Außerdem wird dadurch erreicht, daß dann, wenn das Flurförderzeug fährt und gleichzeitig das Wegeventil 14 sich unbeabsichtigt öffnet, nämlich bei einem Defekt, oder nach vorheriger Betätigung in der Offenstellung hängengeblieben ist, die Lenkung Priorität besitzt und die Höhenverstellung außer Betrieb bleibt. Die Lenkfunktion ist daher bei fahrendem Fahrzeug stets gewährleistet.

Um zur Erzielung der beschriebenen Wirkungen den Druck, der sich bei Betätigung im Stellzylinder 15 einstellt, auf einen bestimmten Wert bringen zu können, ist hierzu in einer der Leitungen 7a, 8a, die zu dem Stellzylinder 15 führten, insbesondere der Leitung 8a, die zu dem der Aufwärtsbewegung der Höhenverstellung zugeordneten Stellraum des Stellzylinders 15 führt, eine Druckbeeinflussungsvorrichtung angeordnet, beispielsweise eine Drossel.

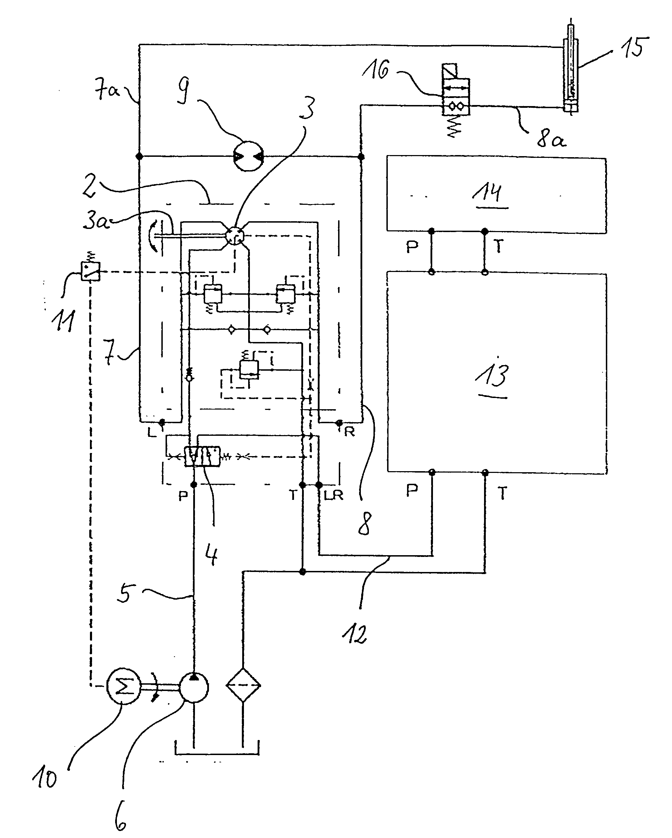

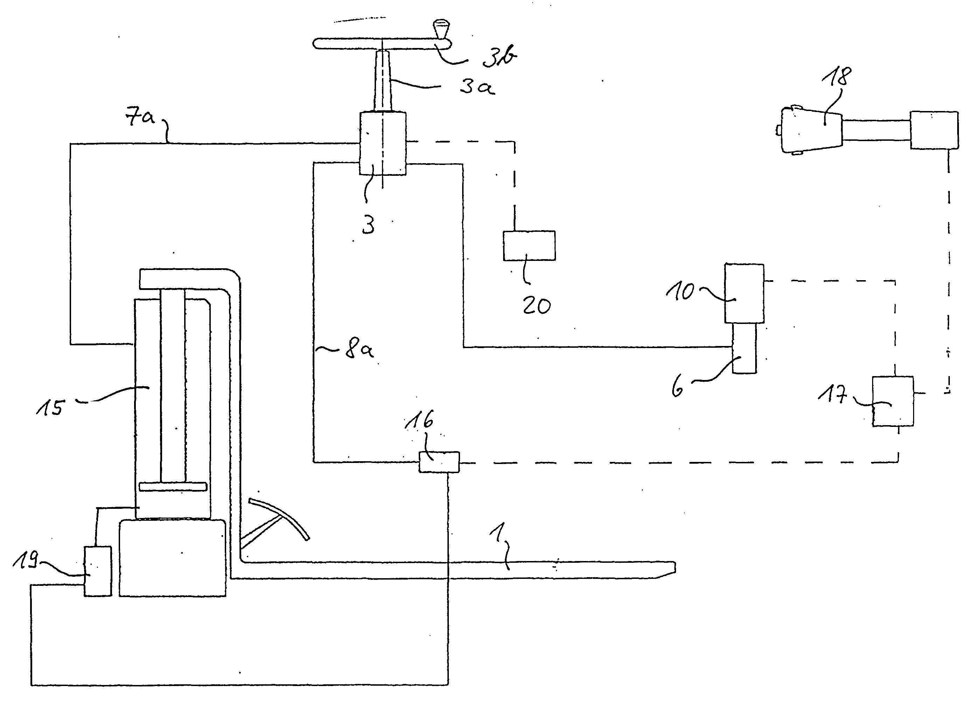

In Figur 3 ist eine Prinzipskizze der Höhenverstellung der Stand- und/oder Sitzanordnung dargestellt, aus der die Ansteuerung des elektromagnetisch betätigbaren Wegeventils 16 hervorgeht. Die Bezugszeichen der bereits zu Figur 2 beschriebenen Elemente sind identisch übernommen.

Das Wegeventil 16 ist an eine Kontrolleinheit 17 angeschlossen, die mit einem Stellsignalgeber 18 zur Höhenverstellung verbunden ist und darüber hinaus, auf nicht näher gezeigte Art, mit Steuersignalgebern und Steuergeräten für Arbeitsfunktionen des Flurförderzeugs in Verbindung steht, beispielsweise aus dem Bereich Arbeitshydraulik oder Fahrantrieb. Durch die Kontrolleinheit 17 wird eine Höhenverstellung der Stand- und/oder Sitzanordnung in bestimmten Betriebszuständen automatisch ausgeschlossen und somit eine Sicherheit gegen Fehlbedienungen geschaffen.

Hierbei steht die Kontrolleinheit derart in Wirkverbindung mit dem Wegeventil 16 der Höhenverstellung und den Steuergeräten der Arbeitsfunktionen, daß bei Vorhandensein eines Steuersignals für eine Arbeitsfunktion und anschließendem Eingang eines Stellsignals für die Höhenverstellung das Wegeventil 16 nicht in Offenstellung steuerbar ist und daß bei Vorhandensein eines Stellsignals für die Höhenverstellung und anschließendem Eingang eines Steuerignals für eine Arbeitsfunktion die Arbeitsfunktion zumindest bis zur Beendigung der Höhenverstellung gesperrt ist.

Die Höhenverstellung kann also tatsächlich nur dann erfolgen kann, wenn nicht gerade eine andere Funktion ausgeführt wird. Es ist daher ausgeschlossen, daß die Standplattform 1 bei fahrendem Flurförderzeug höhenverstellt wird. Umgekehrt werden Arbeitsfunktionen, z.B. das Anfahren des Fahrzeugs, erst dann ermöglicht, wenn ein zuvor eingeleiteter Höhenverstellvorgang abgeschlossen ist. Die Kontrolleinheit 17 verhilft somit dem zuerst eigehenden Signal hinsichtlich der Ausführung des gewünschten Befehls zur Priorität.

In der zu dem Stellzylinder führenden Leitung 8a ist die die bereits oben beschriebene, im Prinzip als permanent wirksame Sicherheitseinrichtung dienende Druckbeeinflussungsvorrichtung 19 symbolisch dargestellt. Mit Hilfe einer weiteren Sicherheitseinrichtung 20 wird der hydraulische Lenkungskreislauf überwacht.

Es versteht sich von selbst, daß die beschriebene Erfindung nicht nur zur Höhenverstellung einer Standplattform verwendbar ist, sondern auch zur Höhenverstellung eines Fahrersitzes, für den Fall, daß das Flurförderzeug für den Betrieb mit sitzender Bedienperson ausgebildet ist.

## Patentansprüche

1. Flurförderzeug mit einer höhenverstellbaren Stand- und/oder Sitzanordnung (1) für eine Bedienperson, wobei die Stand- und/oder Sitzanordnung (1) mit mindestens einem hydraulischen Stellzylinder (15) in Wirkverbindung steht, **dadurch gekennzeichnet,** daß das Flurförderzeug mit einer Lenkhydraulik versehen ist, die eine Pumpe (6) und einen beidseitig beaufschlagbaren Lenkmotor (9) sowie eine zwischengeschaltete Steuereinrichtung (2) aufweist, und der Stellzylinder (15) zur Höhenverstellung der Stand- und/oder Sitzanordnung (1) an die Lenkhydraulik anschließbar ist, wobei der Stellzylinder (15) beidseitig beaufschlagbar und parallel zu dem Lenkmotor (9) geschaltet ist und in einer Leitung (8a), die zu dem Stellzylinder (15) geführt ist, ein schaltbares Ventil angeordnet ist.

2. Flurförderzeug nach Anspruch 1, **dadurch gekennzeichnet,** daß das Ventil in der Leitung (8a) angeordnet ist, die zu einem der Aufwärtsbewegung der Höhenverstellung zugeordneten Stellraum des Stellzylinders (15) führt.

3. Flurförderzeug nach Anspruch 1 oder 2, **dadurch gekennzeichnet,** daß das Ventil als elektromagnetisch betätigbares Wegeventil (16) mit einer Durchlaßstellung und einer Schließstellung ausgebildet ist, das durch mindestens eine Kontrolleinheit (17) steuerbar ist, die an einen Stellsignalgeber (18) zur Höhenverstellung und an Steuersignalgeber und Steuergeräte für Arbeitsfunktionen des Flurförderzeugs angeschlossen ist.

4. Flurförderzeug nach Anspruch 3, **dadurch gekennzeichnet,** daß die Kontrolleinheit (17) derart in Wirkverbindung mit dem Ventil der Höhenverstellung und den Steuergeräten der Arbeitsfunktionen steht, daß bei Vorhandensein eines Steuersignals für eine Arbeitsfunktion und anschließendem Eingang eines Stellsignals für die Höhenverstellung das Ventil nicht in Offenstellung steuerbar ist und daß bei Vorhandensein eines Stellsignals für die Höhenverstellung und anschließendem Eingang eines Steuersignals für eine Arbeitsfunktion die Arbeitsfunktion zumindest bis zur Beendigung der Höhenverstellung gesperrt ist.

5. Flurförderzeug nach einem der Ansprüche 1 bis 4, **dadurch gekennzeichnet,** daß der zur Höhenverstellung erforderliche Druck im Verstellzylinder (15) kleiner ist als der im Lenkmotor (9) beim Lenken des stehenden Fahrzeugs anstehende Druck und größer ist als der im Lenkmotor (9) beim Lenken des fahrenden Flurförderzeugs anstehende Druck.

6. Flurförderzeug nach Anspruch 5, **dadurch gekennzeichnet,** daß in einer Leitung (8a) die zu dem Stellzylinder (15) führt, insbesondere der Leitung (8a), die zu einem der Aufwärtsbewegung der Höhenverstellung zugeordneten Stellraum des Stellzylinders (15) führt, eine Druckbeeinflussungsvorrichtung (19) angeordnet ist.

7. Flurförderzeug nach einem der Ansprüche 1 bis 6, **dadurch gekennzeichnet,** daß die Stand- und/oder Sitzanordnung als Standplattform (1) eines im Stehen zu fahrenden Flurförderzeugs ausgebildet ist.

## Claims

1. Industrial truck having a height-adjustable standing and/or sitting arrangement (1) for an operator, the standing and/or sitting arrangement (1) being in operative connection with at least one hydraulic actuating cylinder (15), characterized in that the industrial truck is provided with a hydraulic steering unit which has a pump (6) and a steering motor (9), which can be acted upon from both sides, and an interposed control device (2), and the actuating cylinder (15) can be connected to the hydraulic steering unit for the height adjustment of the standing and/or sitting arrangement (1), it being the case that the actuating cylinder (15) can be acted upon from both sides and is connected in parallel with the steering motor (9), and a switchable valve is arranged in a line (8a) which is guided to the actuating cylinder (15).

2. Industrial truck according to Claim 1,
characterized in that the valve is arranged in the line (8a) which leads to an actuating space which belongs to the actuating cylinder (15) and is assigned to the upward movement of the height adjustment.

3. Industrial truck according to Claim 1 or 2,
characterized in that the valve is designed as an electromagnetically actuable directional control valve (16) which has an open position and a closed position and can be controlled by at least one control unit (17), which is connected to an actuating-signal transmitter (18) for the height adjustment and to control-signal transmitters and control assemblies for operating functions of the industrial truck.

4. Industrial truck according to Claim 3,
characterized in that the control unit (17) is in operative connection with the height-adjustment valve and the operating-function control assemblies such that, in the presence of a control signal for an operating function and subsequent input of an actuating signal for the height adjustment, the valve cannot be moved into the open position, and that, in the presence of an actuating signal for the height adjustment and subsequent input of a control signal for an operating function, the operating function is blocked at least until the completion of the height adjustment.

5. Industrial truck according to one of Claims 1 to 4, characterized in that the pressure in the actuating cylinder (15) which is necessary for the height adjustment is lower than the pressure prevailing in the steering motor (9) during steering of the stationary vehicle and higher than the pressure prevailing in the steering motor (9) during steering of the moving industrial truck.

6. Industrial truck according to Claim 5, characterized in that a pressure-influencing means (19) is arranged in a line (8a) which leads to the actuating cylinder (15), in particular the line (8a) which leads to an actuating space which belongs to the actuating cylinder (15) and is assigned to the upward movement of the height adjustment.

7. Industrial truck according to one of Claims 1 to 6, characterized in that the standing and/or sitting arrangement is designed as a standing platform (1) of an industrial truck which is to be driven by an operator in the standing position.

## Revendications

1. Chariot de manutention pourvu d'un dispositif (1) pour se tenir assis ou debout, réglable en hauteur, pour un opérateur, dans lequel le dispositif (1) pour se tenir assis ou debout est en liaison active avec au moins un cylindre de réglage (15) hydraulique, **caractérisé en ce que** le chariot de manutention est pourvu d'une hydraulique de direction qui présente une pompe (6) et un moteur de direction (9) pouvant être sollicité des deux côtés ainsi qu'un dispositif de commande intermédiaire (2), et le cylindre de réglage (15) peut être connecté à l'hydraulique de direction pour effectuer un réglage en hauteur du dispositif (1) pour se tenir assis ou debout, le cylindre de réglage (15) pouvant être sollicité des deux côtés et étant monté en parallèle avec le moteur de direction (9) et une soupape commutable étant disposée dans une conduite (8a) allant jusqu'au cylindre de réglage (15).

2. Chariot de manutention selon la revendication 1, **caractérisé en ce que** la soupape est disposée dans la conduite (8a), qui conduit à une chambre de réglage du cylindre de réglage (15) associée au mouvement ascendant du réglage en hauteur.

3. Chariot de manutention selon la revendication 1 ou 2, **caractérisé en ce que** la soupape est conçue en tant que distributeur (16) actionnable électromagnétiquement avec une position de passage et une position de fermeture, qui peut être commandé par au moins une unité de contrôle (17) qui est raccordée à un capteur de signal de réglage (18) pour le réglage en hauteur, et à un capteur de signal de commande et à des dispositifs de commande pour les fonctions de travail du chariot de manutention.

4. Chariot de manutention selon la revendication 3, **caractérisé en ce que** l'unité de contrôle (17) est en liaison active avec la soupape de réglage en hauteur et avec les dispositifs de commande des fonctions de travail, de telle sorte qu'en présence d'un signal de commande pour une fonction de travail et de l'arrivée suivante d'un signal de réglage pour le réglage en hauteur, la soupape ne puisse pas être commandée dans la position ouverte, et qu'en présence d'un signal de réglage pour le réglage en hauteur et de l'arrivée suivante d'un signal de commande pour une fonction de travail, la fonction de travail soit bloquée au moins jusqu'à la fin du réglage en hauteur.

5. Chariot de manutention selon l'une quelconque des revendications 1 à 4, **caractérisé en ce que** la pression nécessaire pour le réglage en hauteur dans le cylindre de réglage (15) est inférieure à la pression dans le moteur de direction (9) lors de la direction du véhicule à l'arrêt et est supérieure à la pression dans le moteur de direction (9) lors de la direction du chariot de manutention en mouvement.

6. Chariot de manutention selon la revendication 5, **caractérisé en ce que**, dans une conduite (8a) qui conduit au cylindre de réglage (15), en particulier la conduite (8a), qui conduit à une chambre de réglage du cylindre de réglage (15) associée au mouvement ascendant du réglage en hauteur, est disposé un dispositif agissant sur la pression (19).

7. Chariot de manutention selon l'une quelconque des revendications 1 à 6, **caractérisé en ce que** le dispositif pour se tenir assis ou debout est conçu en tant que plate-forme (1) pour se tenir debout, d'un chariot de manutention qui se conduit debout.
